# DEMANDE DE BREVET EUROPEEN

(11) **EP 2 306 686 A1**
(43) Date de publication de la demande: **06.04.2011**
(21) Numéro de dépôt: 10181132.1
(22) Date de dépôt: 28.09.2010
(51) Int. Cl.: H04L 29/06

(54) **Dispositif et procédé de gestion automatisée d'identités et de profils d'usagers d'équipements de communication**

(30) Priorité: 30.09.2009 FR 0956799
(71) Demandeur: Alcatel Lucent, 75007 Paris (FR)
(72) Inventeur: Bouzid, Makram, 91620, NOZAY (FR); Kostadinov, Dimitre Davidov, 91620, NOZAY (FR); Aghasaryan, Armen, 91620, NOZAY (FR); Betge-Brezetz, Stéphane, 91620, NOZAY (FR)
(74) Mandataire: Nicolle, Olivier

(57) **Abrégé**

Un dispositif (D) est dédié à la gestion automatisée d'identités et profils d'usagers d'équipements de communication (E1-E3) propres à se connecter à au moins un réseau de communication (R) et à utiliser des applications (A1-AN). Ce dispositif (D) comprend i) des moyens de stockage (MS) agencés pour stocker des identités d'usagers en correspondance d'identifiants et descriptifs d'applications et de profils utilisés par ces usagers avec ces identités, et ii) des moyens d'analyse (MA) agencés, lorsqu'un usager souhaite utiliser une application, pour accéder aux moyens de stockage (MS) afin de déterminer, en fonction d'au moins un critère, au moins une identité de cet usager correspondant au moins partiellement à l'application qu'il souhaite utiliser, en vue d'une sélection d'une identité autorisée à être utilisée par cette application avec une partie au moins du profil qui lui est associé dans les moyens de stockage (MS).

## Description

L'invention concerne les réseaux de communication, filaires et non filaires, et plus précisément la gestion des identités et des profils d'usagers d'équipements de communication capables de se connecter à de tels réseaux de communication.

On entend ici par « profil d'usager » un ensemble de données numériques qui, d'une part, définissent des intérêts (ou des préférences ou des habitudes ou encore des passe temps) d'un usager pour un ou plusieurs sujets, comme par exemple des programmes de télévision, des types de vidéo (ou de film), des programmes de radio, des informations, de la musique, de la publicité, des divertissements, des services utilisés, ou des achats électroniques et, d'autre part, décrivent l'usager, comme par exemple des données sociodémographiques (âge, sexe, catégorie socioprofessionnelle, handicap(s), etc).

Par ailleurs, on entend ici par « identité d'usager » un nom, ou éventuellement un pseudonyme, auquel est associé un profil d'usager ou bien une partie choisie d'un profil d'usager (avec éventuellement ses données sociodémographiques).

Il arrive fréquemment que des usagers, clients d'opérateurs de réseau, utilisent des identités différentes associées à des profils d'usagers différents ou à des parties de profil(s) d'usagers différentes pour interagir avec des services ou des applications. Le choix d'une identité (et du profil associé) est généralement fait manuellement par l'usager, au moyen d'un mot de passe et d'une procédure d'enregistrement de profil, lorsqu'il décide d'interagir avec une application (ou un service).

Certes, plusieurs solutions ont été proposées pour faciliter le choix des identités, mais ces solutions n'apportent pas une entière satisfaction.

Ainsi, la société Microsoft a proposé une application appelée Microsoft Passport® destinée, d'une part, à fédérer pour chaque usager ses différentes identités pour un nombre restreint d'applications, et d'autre part, à partager des informations contenues dans les profils des usagers et stockées dans une base de données centralisée. Cependant, les informations des profils stockés sont relativement limitées et les usagers ne peuvent pas contrôler eux-mêmes la façon dont les informations de leurs profils sont partagées entre les différentes applications qu'ils utilisent. De ce fait les usagers méfiants préfèrent définir eux-mêmes un profil spécifique pour chaque application.

L'application Liberty Alliance® propose de fédérer la gestion des identités d'usagers et de constituer un cercle de confiance avec certains opérateurs. Tous les opérateurs d'un même cercle de confiance peuvent alors accéder aux différentes identités des usagers dont la gestion est fédérée. Hélas, cette application ne permet pas un partage des informations contenues dans les profils des usagers.

L'application Eclipse Higgins® propose à des usagers de créer et gérer plusieurs identités sous la forme de « i-cards ». Plus précisément, lorsqu'un usager veut utiliser une application (compatible avec la technologie Higgins), l'application Eclipse Higgins® lui permet de sélectionner parmi ces différentes i-cards celle qu'il veut associer à cette application. Cependant, cette sélection se fait manuellement, sans assistance et donc sans pré-sélection, ce qui peut s'avérer compliqué lorsque l'application est inconnue de l'usager et/ou que ce dernier dispose d'un nombre élevé de i-cards.

L'invention a donc pour but d'améliorer la situation, et plus précisément de permettre une sélection automatisée des identités des usagers, ainsi que des profils et des éventuelles politiques d'utilisation correspondants, compte tenu des applications qu'ils souhaitent utiliser, ou au moins la détermination de listes comportant des identités qui sont les mieux adaptées aux applications qu'ils souhaitent utiliser.

Elle propose à cet effet un dispositif, dédié à la gestion automatisée d'identités et profils d'usagers d'équipements de communication propres à se connecter à au moins un réseau de communication et à utiliser des applications, et comprenant :
- des moyens de stockage chargés de stocker des identités d'usagers en correspondance d'identifiants et descriptifs d'applications et de profils utilisés par ces usagers avec ces identités, et
- des moyens d'analyse agencés (ou conçus), lorsqu'un usager souhaite utiliser une application, pour accéder aux moyens de stockage de manière à déterminer, en fonction d'au moins un critère, au moins une identité de cet usager correspondant au moins partiellement à l'application qu'il souhaite utiliser, en vue d'une sélection d'une identité autorisée à être utilisée par cette application avec une partie au moins du profil qui lui est associé dans les moyens de stockage.

Le dispositif selon l'invention peut comporter d'autres caractéristiques qui peuvent être prises séparément ou en combinaison, et notamment :
- ses moyens d'analyse peuvent être agencés, après avoir déterminé au moins une identité d'usager qui correspond au moins partiellement à l'application que cet usager souhaite utiliser, pour proposer à cet usager chaque identité déterminée de sorte qu'il sélectionne lui-même une identité proposée pouvant être utilisée par cette application ;
- en variante, ses moyens d'analyse peuvent être agencés, après avoir déterminé au moins une identité d'usager correspondant au moins partiellement à l'application que l'usager souhaite utiliser, pour sélectionner une identité pouvant être utilisée par cette application ;
- ses moyens d'analyse peuvent être agencés pour déterminer le contexte d'utilisation d'une application ;
- il peut comprendre des moyens de traitement agencés pour constituer des politiques d'utilisation de profil d'usager à partir d'informations qui sont représentatives d'interactions des usagers avec des applications ;
- en présence de profils d'usagers comportant des informations associées à des niveaux d'utilisation, certaines au moins des politiques d'utilisation de profil d'usager peuvent définir les niveaux d'utilisation des informations des profils en fonction des types (ou catégories) auxquel(le)s correspondent les applications ;
- ses moyens de stockage peuvent être agencés pour stocker les identités d'usagers en correspondance d'identifiants et descriptifs d'applications, de profils utilisés par ces usagers avec ces identités, et de politiques d'utilisation des informations de profil d'usager et/ou de contextes d'utilisation d'identité ;
- ses moyens d'analyse peuvent être agencés pour utiliser un critère de similarité sémantique inter applications et/ou un critère de similarité contextuelle d'utilisation d'identité et/ou un critère de statistique d'utilisation d'identité ;
   ➢ ses moyens de stockage peuvent être agencés pour stocker les identités d'usagers en correspondance de statistiques d'utilisation d'identité. Dans ce cas, ses moyens d'analyse peuvent être agencés pour mettre à jour les statistiques d'utilisation d'identités qui sont stockées dans ses moyens de stockage, après chaque utilisation d'une identité sélectionnée.

L'invention propose également un serveur équipé d'un dispositif de gestion du type de celui présenté ci-avant.

L'invention propose également un procédé, dédié à la gestion automatisée d'identités et profils d'usagers d'équipements de communication propres à se connecter à au moins un réseau de communication et à utiliser des applications, et comprenant les étapes suivantes lorsqu'un usager souhaite utiliser une application :
i) accéder à des moyens de stockage, dans lesquels sont stockées des identités d'usagers en correspondance d'identifiants et descriptifs d'applications et de profils utilisés par ces usagers avec ces identités, afin de déterminer, en fonction d'au moins un critère, au moins une identité de cet usager correspondant au moins partiellement à l'application qu'il souhaite utiliser, et
ii) en présence de plusieurs identités déterminées, sélectionner l'une d'entre elles pour autoriser l'application à l'utiliser avec une partie au moins du profil qui lui est associé dans les moyens de stockage.

Le procédé selon l'invention peut comporter d'autres caractéristiques qui peuvent être prises séparément ou en combinaison, et notamment :
- à l'étape ii) on peut proposer à l'usager chaque identité déterminée de sorte qu'il sélectionne une identité proposée pouvant être utilisée par l'application ;
- en variante, à l'étape ii) on peut sélectionner automatiquement pour l'usager une identité qui peut être utilisée par l'application ;
- à l'étape i) on peut déterminer le contexte d'utilisation de l'application ;
- à l'étape i) on peut utiliser un critère de similarité sémantique inter applications et/ou un critère de similarité contextuelle d'utilisation d'identité et/ou un critère de statistique d'utilisation d'identité ;
   ➢ à l'étape ii) on peut mettre à jour des statistiques d'utilisation d'identités après chaque utilisation d'une identité sélectionnée.

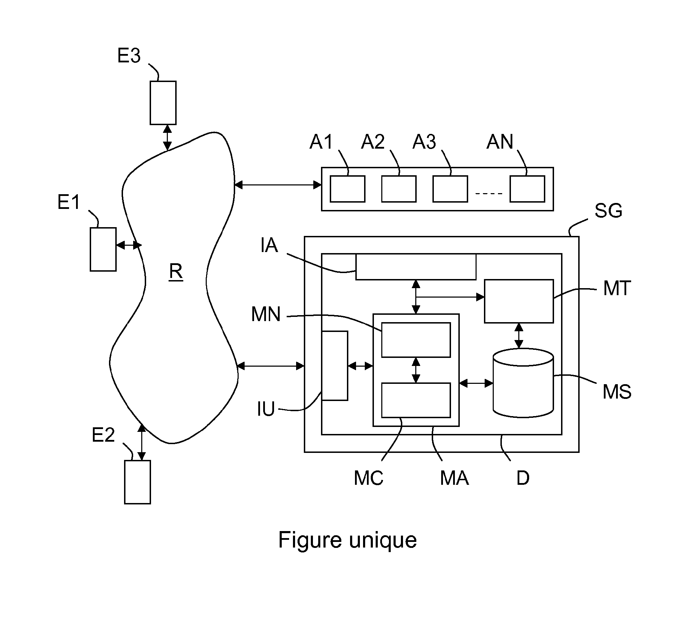

D'autres caractéristiques et avantages de l'invention apparaîtront à l'examen de la description détaillée ci-après, et du dessin annexé, sur lequel l'unique figure illustre de façon très schématique un réseau de communication auquel sont connectés des équipements de communication d'usagers, des applications (ou services) et un serveur équipé d'un exemple de réalisation d'un dispositif de gestion selon l'invention.

Le dessin annexé pourra non seulement servir à compléter l'invention, mais aussi contribuer à sa définition, le cas échéant.

L'invention a pour objet d'offrir un procédé, et un dispositif (D) associé, permettant une gestion automatisée des identités et des profils d'usagers d'équipements de communication (Ei) capables de se connecter à au moins un réseau de communication (R) et d'utiliser des applications (Aj) accessibles via ledit réseau (R).

Dans ce qui suit, on considère à titre d'exemple non limitatif que les usagers sont munis d'équipements de communication (Ei) de type filaire, comme par exemple des ordinateurs, pouvant se connecter à un réseau de communication (R) de type filaire (par exemple ADSL). Mais, l'invention n'est limitée ni à ce type de réseau de communication, ni à ce type d'équipement de communication. Elle concerne en effet tout type de réseau de communication filaire ou non filaire, et donc tout type d'équipement de communication pouvant se connecter à un réseau de communication filaire ou non filaire. Par conséquent, le réseau de communication (R) pourra également être, par exemple, un réseau mobile (ou cellulaire), et les équipements de communication (Ei) pourront également être, par exemple, des ordinateurs portables, des téléphones fixes ou mobiles, des assistants personnels numériques communicants (ou « PDAs »), des consoles de jeux communicantes ou des récepteurs de contenus multimédia (comme par exemple des STBs (« Set-Top Boxes »)).

On a schématiquement représenté sur l'unique figure un exemple de réseau (de communication) R, éventuellement connecté au réseau de réseaux (ou Internet), et auquel sont connectés, d'une part, des équipements (de communication) Ei, appartenant à des usagers qui sont clients (directement ou indirectement (nomades)) de l'opérateur dudit réseau R, et d'autre part, des applications (ou services) Aj (j = 1 à N) pouvant être utilisé(e)s par les équipements de communication Ei, en partie ou en totalité.

Dans l'exemple non limitatif illustré, trois équipements de communication E1-E3 (i = 1 à 3) sont connectés au réseau R. Mais, l'invention s'applique dès lors qu'au moins un équipement de communication Ei est connecté au réseau R.

On notera que les applications (ou services) Aj peuvent faire partie du réseau R, et notamment de son coeur de réseau (par exemple lorsqu'il est de type IMS). Dans ce cas, elles (ils) appartiennent à l'opérateur du réseau R. Mais, cela n'est pas obligatoire. Elles (ils) peuvent en effet faire partie de serveur(s) d'application(s) connecté(s) au, ou accessible(s) par le, réseau R (éventuellement via l'Internet), et appartenant à des fournisseurs de service(s). Certaines applications peuvent être également (et éventuellement) implantées dans des équipements de communication Ei.

Ces applications Aj peuvent être de tout type dès lors qu'elles doivent utiliser des informations (privées et/ou publiques) contenues dans des profils d'usagers. Ainsi, il pourra s'agir d'applications de vidéo à la demande (ou VoD), de commerce électronique ou de publicité, par exemple.

On considère dans ce qui suit, à titre d'exemple non limitatif, que les applications Aj sont accessibles aux équipements de communication Ei via le réseau R.

L'invention propose d'utiliser au moins un dispositif de gestion D afin de gérer automatiquement, par exemple pour l'opérateur du réseau R ou bien pour un fournisseur d'application(s) ou de service(s), des identités et des profils des usagers des équipements de communication Ei.

Ce dispositif (de gestion) D peut par exemple, et comme illustré non limitativement, faire partie d'un serveur de gestion SG qui est connecté au réseau R (ou bien accessible via ce dernier (R)). Mais, cela n'est pas obligatoire. Il pourrait en effet être connecté à un serveur ou bien constituer un équipement de réseau disposant de ses propres moyens de communication.

Un dispositif (de gestion) D, selon l'invention, comprend au moins des moyens de stockage MS et des moyens d'analyse MA.

Les moyens de stockage MS sont agencés pour stocker des identités d'usagers en correspondance au moins d'identifiants et descriptifs d'applications et de profils qui sont utilisés par les usagers avec ces identités.

Ces moyens de stockage MS peuvent se présenter sous n'importe quelle forme connue de l'homme de l'art, comme par exemple une mémoire (éventuellement purement logicielle) ou une base de données.

On notera que les identifiants sont définis par les usagers, tandis que les profils peuvent être définis soit par les usagers, soit par un tiers (par exemple au moyen d'outils de profilage d'usagers), comme par exemple l'opérateur du réseau R ou des fournisseurs d'applications ou de services, en fonction des actions effectuées par les usagers avec leurs équipements de communication Ei.

Les moyens d'analyse MA du dispositif D interviennent lorsqu'un usager souhaite (ou doit) utiliser une application Aj (nécessitant une identification de l'usager) avec son équipement de communication Ei. Plus précisément, ils sont alors agencés pour accéder aux moyens de stockage MS afin de déterminer, en fonction d'au moins un critère, au moins une identité de l'usager qui correspond au moins partiellement à l'application Aj qu'il souhaite (ou doit) utiliser. Cette détermination est destinée à permettre la sélection d'une identité de l'usager que l'application Aj sera alors autorisée à utiliser avec une partie au moins du profil qui est associé à cette identité sélectionnée dans les moyens de stockage MS.

Ce n'est pas forcément l'application Aj, qui doit être utilisée par un usager, qui demande au moins une identité de cet usager auprès du dispositif D. En effet, il peut être avantageux que l'application Aj demande à l'équipement de communication Ei de l'usager de se charger d'effectuer cette demande auprès du dispositif D. Dans un cas comme dans l'autre, la demande se fait au moyen d'une requête demandant au dispositif D de sélectionner au moins une identité pour l'usager et l'application Aj considérés. Cette requête lui est transmise via le réseau R, et il (D) la réceptionne par exemple, et comme illustré, au moyen soit d'une interface IA qui est dédiée aux applications Aj (lorsque la requête émane de l'application Aj), soit d'une interface IU qui est dédiée aux usagers (lorsque la requête émane d'un équipement de communication Ei d'un usager).

Il est également important de noter que les identités, qui sont déterminées par les moyens d'analyse MA pour un usager souhaitant utiliser une application Aj, sont celles qu'ils considèrent comme les mieux adaptées à cette application Aj. Les moyens d'analyse MA peuvent par exemple attribuer des scores aux différentes identités de l'usager considéré, puis constituer une liste d'identités dans laquelle lesdites identités sont classées en fonction de leur score (par ordre croissant ou décroissant). Plus le score est élevé, plus l'identité est considérée comme adaptée à la situation. Par exemple, on peut choisir de ne retenir dans une liste que les M identités qui présentent un score supérieur à une valeur choisie, ou bien les identités présentant les M meilleurs scores.

Comme illustré non limitativement, la détermination des identités peut par exemple être réalisée par un sous-module MN dédié des moyens d'analyse MA.

Lorsque l'usager utilise une application Aj dont l'identifiant est stocké dans les moyens de stockage MS en correspondance d'identité(s) de l'usager considéré, les moyens d'analyse MA doivent rechercher dans les moyens de stockage MS les différentes identités de cet usager qui sont stockées en correspondance de l'identifiant de cette application Aj. Puis, ils peuvent par exemple appliquer un critère de similarité contextuelle d'utilisation d'identité entre ces diverses identités déterminées, afin de déterminer au moins l'une d'entre elles. On comprendra que cette solution nécessite que les moyens de stockage MS stockent les identités des usagers en correspondance de contextes d'utilisation d'identité.

On entend ici par « contexte d'utilisation d'identité » des informations décrivant le contexte dans lequel un usager a utilisé une identité pour une application Aj donnée. A titre d'exemple non limitatif, le contexte peut être professionnel ou privé ou un loisir ou une humeur ou le temps (heure, jour, semaine, mois, année et analogues) ou un lieu (de domicile ou de travail ou de loisir).

De préférence, on va chercher à déterminer les identités qui ont déjà été utilisées par l'usager considéré avec l'application concerné Aj dans le même contexte. En l'absence de contexte identique on va alors rechercher les identités ayant été utilisées par l'usager considéré avec l'application Aj dans un contexte similaire.

On notera que le contexte peut être adressé au dispositif D dans la requête d'identité (émanant de l'équipement de communication Ei ou de l'application Aj). Mais, en variante ou en complément, les moyens d'analyse MA peuvent être agencés de manière à déterminer le contexte d'utilisation de chaque application Aj par un usager, comme par exemple en récupérant l'heure et/ou la date du système, ou en demandant à l'équipement de communication Ei de localiser géographiquement l'usager (par exemple par triangulation ou par position GPS dans la cas d'un mobile) ou de déterminer son humeur (par exemple par l'intermédiaire d'une icône sélectionnée manuellement par l'usager). Dans un cas comme dans l'autre, les moyens d'analyse MA sont également agencés pour stocker dans les moyens de stockage MS chaque contexte d'utilisation d'identité, qu'ils ont déterminé ou reçu, en correspondance de l'identité concernée et de l'identifiant de l'application Aj concernée.

Si il n'y a pas de réelle similitude contextuelle ou bien si il y a plusieurs contextes d'utilisation possibles, les moyens d'analyse MA peuvent être agencés de manière à utiliser un critère de statistique d'utilisation d'identité. Par exemple, ils peuvent retenir les identités qui ont été les plus utilisées avec l'application concernée Aj (c'est-à-dire celles qui présentent les statistiques d'utilisation les plus grandes). Cela nécessite que les moyens d'analyse MA disposent de statistiques d'utilisation d'identités. Ces dernières peuvent par exemple être stockées dans les moyens de stockage MS. Mais, cela n'est pas obligatoire. Elles pourraient en effet être stockées dans d'autres moyens de stockage du dispositif D.

Ces statistiques peuvent être avantageusement constituées par les moyens d'analyse MA au fur et à mesure de l'utilisation des diverses identités des usagers. Pour ce faire, ils (MA) peuvent par exemple mettre à jour les statistiques d'utilisation d'identités après chaque utilisation d'une identité sélectionnée.

Lorsque l'usager utilise une application Aj pour la première fois, son identifiant n'est pas stocké dans les moyens de stockage MS en correspondance d'identité(s) de l'usager considéré. Dans ce cas, les moyens d'analyse MA doivent rechercher parmi les applications Aj', dont les identifiants sont stockés dans les moyens de stockage MS en correspondance d'identité(s) de cet usager, celle(s) qui présente(nt) une similarité avec l'application Aj (j ≠ j').

Pour ce faire, ils peuvent par exemple appliquer un critère de similarité sémantique entre l'application concernée Aj et les autres applications Aj' déjà utilisées par l'usager. L'application de ce critère consiste à estimer une distance sémantique inter-applications à partir de leurs descriptifs respectifs qui doivent alors être de type sémantique et qui sont stockés dans les moyens de stockage MS. Toute technique d'estimation de distance sémantique connue de l'homme de l'art peut être utilisée.

L'application du critère de similarité sémantique inter-applications peut par exemple être réalisée par un sous-module MC dédié des moyens d'analyse MA, qui est couplé au sous-module MN dédié à la détermination des identités.

On entend ici par «descriptif sémantique» une ou plusieurs informations signifiantes permettant de décrire ou classer une application. A titre d'exemple non limitatif une telle information peut être un type ou une catégorie, comme par exemple le commerce électronique ou la vidéo à la demande (VoD).

Comme dans la situation précédente (application déjà utilisée), les moyens d'analyse MA peuvent également et éventuellement utiliser un critère de similarité contextuelle d'utilisation d'identité et/ou un critère de statistique d'utilisation d'identité pour effectuer leur détermination d'identités. Un score global tenant compte du résultat de chaque critère appliqué peut par exemple être attribué à chaque identité afin de déterminer certaines d'entre elles.

On notera que la sélection peut être effectuée soit par le dispositif D, et plus précisément par les moyens d'analyse MA (et donc de façon totalement automatisée - sans intervention de l'usager concerné), soit par l'usager concerné. On comprendra que dans un cas comme dans l'autre, la sélection ne peut s'envisager qu'à condition qu'au moins deux identités ait été déterminées par les moyens d'analyse MA.

Dans le premier cas (totalement automatisé), une fois que les moyens d'analyse MA ont déterminé plusieurs identités pour l'usager considéré, ils sélectionnent l'une d'entre elles, et plus précisément celle qui leur paraît la mieux adaptée à la situation (par exemple celle à laquelle ils ont attribué le meilleur score (éventuellement global)). Si les identités sont en outre stockées en correspondance de politiques d'utilisation des informations de profil d'usager, les moyens d'analyse MA peuvent alors également déterminer la politique d'utilisation des informations du profil d'usager qui est stockée en correspondance de l'identité sélectionnée.

On notera également que certains au moins des profils d'usagers peuvent comporter des informations qui sont associées à des niveaux d'utilisation. Dans ce cas, certaines au moins des politiques d'utilisation de profil d'usager peuvent définir les niveaux d'utilisation des informations des profils en fonction de types ou catégories auxquel(le)s correspondent les applications Aj. A titre d'exemple non limitatif, les informations des profils peuvent être associées à deux niveaux d'utilisation différents, l'un regroupant les informations de profil publiques et l'autre regroupant les informations de profil privées.

On notera également que les politiques d'utilisation des informations de profil d'usager peuvent être soit définies par les usagers, soit par le dispositif D. Dans ce dernier cas, le dispositif D peut par exemple comprendre, comme illustré, des moyens de traitement MT, couplés aux moyens d'analyse MA, et agencés de manière à constituer des politiques d'utilisation de profil d'usager à partir d'informations qui sont représentatives d'interactions des usagers (via leurs équipements de communication Ei) avec des applications Aj'. Dans un cas comme dans l'autre, les moyens d'analyse MA sont également agencés pour stocker dans les moyens de stockage MS chaque politique d'utilisation de profil d'usager, qu'ils ont constituée ou reçue, en correspondance de l'identité concerné et de l'identifiant de l'application Aj concernée.

On notera également qu'une fois que le dispositif D a sélectionné une identité, il peut éventuellement la soumettre à l'usager en vue d'obtenir son approbation.

Dans le second cas, une fois que les moyens d'analyse MA ont déterminé plusieurs identités pour l'usager considéré, ils génèrent à son attention un message d'interrogation contenant les désignations des identités déterminées pour lui (accompagnées éventuellement de scores associés), afin qu'il sélectionne l'une d'entre elles, et plus précisément celle qui lui paraît la mieux adaptée à la situation (par exemple, mais pas obligatoirement, celle qui est associée au meilleur score). Le message d'interrogation peut éventuellement comprendre chaque politique d'utilisation des informations du profil d'usager qui est stockée en correspondance de chaque identité déterminée, ou bien des politiques d'utilisation (ou parties de politiques d'utilisation) qu'ils recommandent pour chaque identité et qu'ils ont déterminées à partir de politiques d'utilisation (ou parties de politiques d'utilisation) associées à des applications similaires et/ou des contextes d'utilisation similaires. Le message d'interrogation peut également et éventuellement comprendre une valeur représentative du niveau de confiance que le dispositif D accorde à la nouvelle application Aj. Cela peut notamment permettre de protéger l'usager contre des applications ou services malveillant(e)s qui chercheraient à accéder à des informations personnelles sensibles, par exemple.

Le message d'interrogation est alors transmis à l'équipement de communication Ei de l'usager, via le réseau R, par le dispositif D, par exemple, et comme illustré, sous le contrôle d'une interface IU dédiée aux usagers que comprend ledit dispositif D. Une fois que l'usager a sélectionné une identité, ainsi qu'éventuellement une politique d'utilisation de profil recommandée, il ordonne à son équipement de communication Ei de transmettre au dispositif D, via le réseau R, un message de réponse contenant la désignation de cette identité sélectionnée. Ce message de réponse est reçu par l'interface usagers IU puis communiqué aux moyens d'analyse MA.

Dans un cas comme dans l'autre, une fois que les moyens d'analyse MA disposent d'une identité sélectionnée, ils peuvent par exemple générer un message de réponse contenant la désignation de cette identité sélectionnée ainsi qu'une partie au moins du profil qui est associé à cette identité sélectionnée dans les moyens de stockage MS (ou qui a été choisie par l'usager après avoir été éventuellement construite par les moyens d'analyse MA). Ce message de réponse peut être transmis via le réseau R soit à l'application concernée Aj sous le contrôle de l'interface d'applications IA (notamment lorsque la requête d'identité a été émise par cette application Aj), soit à l'équipement de communication Ei sous le contrôle de l'interface usagers IU lorsque la requête d'identité émane de cet équipement de communication Ei. Dans ce dernier cas, c'est l'équipement de communication Ei qui se charge de transmettre le contenu du message de réponse à l'application concernée Aj.

Dans une variante, lorsque la requête d'identité émane d'un équipement de communication Ei, on peut envisager qu'une fois que les moyens d'analyse MA disposent d'une identité sélectionnée, ils génèrent un certificat ou une clé, dédiée spécifiquement à cette identité sélectionnée et éventuellement à usage unique, qui est transmis(e) à l'équipement de communication Ei demandeur et qui est stocké(e) dans les moyens de stockage MS en correspondance de l'identité sélectionnée. L'équipement de communication Ei demandeur se charge alors de communiquer à l'application concernée Aj le certificat ou la clé généré(e) par le dispositif D. L'application Aj adresse alors au dispositif D une requête contenant ce certificat ou cette clé afin qu'il lui communique un message de réponse contenant la désignation de l'identité sélectionnée qui est associée audit certificat ou à ladite clé, ainsi qu'une partie au moins du profil qui est associé à cette identité sélectionnée dans les moyens de stockage MS (ou qui a été choisie par l'usager après avoir été éventuellement construite par les moyens d'analyse MA).

La sélection d'identité, la génération de message d'interrogation et le traitement des messages de réponse reçus peuvent par exemple être réalisés par le sous-module MN.

On notera que lorsque l'usager utilise une application Aj avec une identité on peut envisager qu'il puisse demander au dispositif D de lui proposer ou de sélectionner une autre identité (par exemple parce qu'il a réalisé que l'identité sélectionnée ne convient pas).

Par ailleurs, il n'est pas obligatoire que le dispositif D propose au moins une identité à utiliser chaque fois qu'un usager veut utiliser une application Aj. On peut en effet envisager que le dispositif D fasse automatiquement une proposition d'identité(s) lors de chaque première utilisation d'une application Aj par un usager, et qu'ensuite on permette à cet usager de définir les applications pour lesquelles le dispositif D devra systématiquement lui proposer au moins une identité et celles pour lesquelles l'identité sélectionnée la toute première fois pourra être réutilisée. L'interface usager IU pourrait par exemple être adaptée à cet effet.

Le dispositif de gestion D selon l'invention, et notamment ses moyens d'analyse MA et ses éventuels moyens de traitement MT, peuvent être réalisés sous la forme de circuits électroniques, de modules logiciels (ou informatiques), ou d'une combinaison de circuits électroniques et de modules logiciels.

Il est important de noter que l'invention peut être également considérée sous l'angle d'un procédé de gestion automatisée d'identités et profils d'usagers, pouvant être notamment mis en oeuvre au moyen d'un dispositif de gestion D du type de celui présenté ci-avant. Les fonctionnalités offertes par la mise en oeuvre du procédé selon l'invention étant identiques à celles offertes par le dispositif de gestion D présenté ci-avant, seule la combinaison de fonctionnalités principales offerte par le procédé est présentée ci-après.

Ce procédé de gestion comprend deux étapes principales (i) et (ii) qui sont mises en oeuvre chaque fois qu'un usager souhaite utiliser une application Aj.

Une première étape principale (i) consiste à accéder à des moyens de stockage MS, dans lesquels sont stockées des identités d'usagers en correspondance au moins d'identifiants et descriptifs d'applications et de profils utilisés par ces usagers avec ces identités, afin de déterminer, en fonction d'au moins un critère, au moins une identité de cet usager qui correspond au moins partiellement à l'application qu'il souhaite utiliser.

Une seconde étape principale (ii) consiste, en présence de plusieurs identités déterminées lors de la première étape principale (i), à sélectionner l'une d'entre elles pour autoriser l'application Aj concernée à l'utiliser avec une partie au moins du profil qui lui est associé dans les moyens de stockage MS.

L'invention ne se limite pas aux modes de réalisation de dispositif de gestion, de serveur et de procédé de gestion décrits ci-avant, seulement à titre d'exemple, mais elle englobe toutes les variantes que pourra envisager l'homme de l'art dans le cadre des revendications ci-après.

## Revendications

1. Dispositif (D) de gestion automatisée d'identités et profils d'usagers d'équipements de communication (Ei) propres à se connecter à au moins un réseau de communication (R) et à utiliser des applications (Aj), **caractérisé en ce qu'**il comprend i) des moyens de stockage (MS) agencés pour stocker des identités d'usagers en correspondance d'identifiants et descriptifs d'applications (Aj) et de profils utilisés par lesdits usagers avec ces identités, et ii) des moyens d'analyse (MA) agencés, lorsqu'un usager souhaite utiliser une application (Aj), pour accéder auxdits moyens de stockage (MS) de manière à déterminer, en fonction d'au moins un critère, au moins une identité de cet usager correspondant au moins partiellement à ladite application (Aj) qu'il souhaite utiliser, en vue d'une sélection d'une identité autorisée à être utilisée par ladite application (Aj) avec une partie au moins du profil associé à cette identité sélectionnée dans les moyens de stockage (MS).

2. Dispositif selon la revendication 1, **caractérisé en ce que** lesdits moyens d'analyse (MA) sont agencés, après avoir déterminé au moins une identité d'usager correspondant au moins partiellement à l'application (Aj) que ledit usager souhaite utiliser, pour proposer audit usager chaque identité déterminée de sorte qu'il sélectionne une identité proposée pouvant être utilisée par ladite application (Aj).

3. Dispositif selon la revendication 1, **caractérisé en ce que** lesdits moyens d'analyse (MA) sont agencés, après avoir déterminé au moins une identité d'usager correspondant au moins partiellement à l'application (Aj) que ledit usager souhaite utiliser, pour sélectionner une identité pouvant être utilisée par ladite application (Aj).

4. Dispositif selon l'une des revendications 1 à 3, **caractérisé en ce que** lesdits moyens d'analyse (MA) sont agencés pour déterminer le contexte d'utilisation d'une application (Aj).

5. Dispositif selon l'une des revendications 1 à 4, **caractérisé en ce qu'**il comprend des moyens de traitement (MT) agencés pour constituer des politiques d'utilisation de profil d'usager à partir d'informations représentatives d'interactions des usagers avec des applications (Aj).

6. Dispositif selon l'une des revendications 1 à 5, **caractérisé en ce qu'**en présence de profils d'usagers comportant des informations associées à des niveaux d'utilisation, certaines au moins des politiques d'utilisation de profil d'usager définissent les niveaux d'utilisation des informations des profils en fonction de types auxquels correspondent lesdites applications (Aj).

7. Dispositif selon l'une des revendications 1 à 6, **caractérisé en ce que** lesdits moyens de stockage (MS) sont agencés pour stocker lesdites identités d'usagers en correspondance d'identifiants d'applications (Aj), de profils utilisés par lesdits usagers avec ces identités, et de politiques d'utilisation des informations de profil d'usager et/ou de contextes d'utilisation d'identité.

8. Dispositif selon l'une des revendications 1 à 7, **caractérisé en ce que** lesdits moyens d'analyse (MA) sont agencés pour utiliser un critère de similarité sémantique inter applications et/ou un critère de similarité contextuelle d'utilisation d'identité et/ou un critère de statistique d'utilisation d'identité.

9. Dispositif selon la combinaison des revendications 7 et 8, **caractérisé en ce que** lesdits moyens de stockage (MS) sont agencés pour stocker lesdites identités d'usagers en correspondance de statistiques d'utilisation d'identité, et **en ce que** lesdits moyens d'analyse (MA) sont agencés pour mettre à jour lesdites statistiques d'utilisation d'identités, stockées dans lesdits moyens de stockage (MS), après chaque utilisation d'une identité sélectionnée.

10. Serveur (SG) pour un réseau de communication (R) auquel peuvent se connecter des équipements de communication (Ei) d'usagers propres à utiliser des applications (Aj), **caractérisé en ce qu'**il comprend un dispositif de gestion (D) selon l'une des revendications précédentes.

11. Procédé de gestion automatisée d'identités et profils d'usagers d'équipements de communication (Ei) propres à se connecter à au moins un réseau de communication (R) et à utiliser des applications (Aj), **caractérisé en ce qu'**il comprend les étapes suivantes lorsqu'un usager souhaite utiliser une application (Aj) :
i) accéder à des moyens de stockage (MS), dans lesquels sont stockées des identités d'usagers en correspondance d'identifiants et descriptifs d'applications (Aj) et de profils utilisés par lesdits usagers avec ces identités, afin de déterminer, en fonction d'au moins un critère, au moins une identité de cet usager correspondant au moins partiellement à ladite application (Aj) qu'il souhaite utiliser, et
ii) en présence de plusieurs identités déterminées, sélectionner l'une d'entre elles pour autoriser ladite application (Aj) à l'utiliser avec une partie au moins du profil qui lui est associé dans lesdits moyens de stockage (MS).

12. Procédé selon la revendication 11, **caractérisé en ce qu'**à l'étape ii) on propose audit usager chaque identité déterminée de sorte qu'il sélectionne une identité proposée pouvant être utilisée par ladite application (Aj).

13. Procédé selon la revendication 11, **caractérisé en ce qu'**à l'étape ii) on sélectionne automatiquement pour l'usager une identité qui peut être utilisée par ladite application (Aj).

14. Procédé selon l'une des revendications 11 à 13, **caractérisé en ce qu'**à l'étape i) on détermine le contexte d'utilisation de l'application (Aj).

15. Procédé selon l'une des revendications 11 à 14, **caractérisé en ce qu'**à l'étape i) on utilise un critère de similarité sémantique inter applications et/ou un critère de similarité contextuelle d'utilisation d'identité et/ou un critère de statistique d'utilisation d'identité.

16. Procédé selon la revendication 15, **caractérisé en ce qu'**à l'étape ii) on met à jour des statistiques d'utilisation d'identités après chaque utilisation d'une identité sélectionnée.
